# EUROPÄISCHE PATENTSCHRIFT

(11) **EP 1 442 271 B1**
(45) Veröffentlichungstag und Bekanntmachung des Hinweises auf die Patenterteilung: **22.07.2009**
(21) Anmeldenummer: 02769883.6
(22) Anmeldetag: 22.08.2002
(51) Int. Cl.: G01C 21/36

(54) **VERFAHREN ZUR BEREITSTELLUNG VON ZIELFÜHRUNGSHINWEISEN**
METHOD FOR PROVIDING NAVIGATION INSTRUCTIONS
PROCEDE POUR LA MISE A DISPOSITION D'INFORMATIONS DE NAVIGATION

(30) Priorität: 30.10.2001 DE 10153528
(43) Veröffentlichungstag der Anmeldung: 04.08.2004
(73) Patentinhaber: ROBERT BOSCH GMBH, 70442 Stuttgart (DE)
(72) Erfinder: FRIEDRICHS, Arne, 38114 Braunschweig (DE); DRAEGER, Gerd, 38102 Braunschweig (DE); SKWAREK, Volker, 31162 Bad Salzdetfurth (DE)
(86) Internationale Anmeldenummer: PCT/DE2002/003069
(87) Internationale Veröffentlichungsnummer: WO 2003/040655

(56) Entgegenhaltungen:
- US-A- 6 067 502

## Beschreibung

Die Erfindung geht aus von einem Verfahren zur Bereitstellung von Zielführungshinweisen für einen Nutzer, der über Karten- beziehungsweise Routendaten verfügt.

Es sind Navigationseinrichtungen bekannt, die Fahrzeuge beziehungsweise deren Nutzer auf einer zuvor berechneten Route führen. Navigationseinrichtungen, die über einen Zugriff auf Datenmaterial außerhalb der befahrenen Route verfügen, sind in der Lage, den Nutzer auf einer Alternativroute zum Ziel zu führen, die gegebenenfalls neu berechnet werden muss. Befindet sich der Nutzer jedoch außerhalb des digitalisierten Straßennetzes, so wird der Nutzer üblicherweise dazu aufgefordert, unmittelbar umzukehren oder es werden in Form einer Kompassrose Himmelsrichtung und Entfernung zu einem bekannten Routenpunkt angezeigt.

Mit der Kompassrose ist in der Regel die kürzeste Entfernung (Luftlinie) zu einem auf der Karte oder Route bekannten Wegeabschnitt gemeint. Die Kompassrose wird dabei als (Himmels-) Richtung gegenüber Nord oder als Fahrtrichtung (Richtung des Fahrzeuges relativ zum Wegeabschnitt) verstanden.

Aus der US 6,067,502 ist ein Navigationssystem bekannt, das Richtungsinformationen und Entfernungsinformationen zu einem Ziel in verschiedenen Situationen anzeigt. In Varianten können verschiedene Detailgrade eingestellt werden oder Alternativrouten. Gegebenenfalls kann auch noch die Kompassrichtung mit angezeigt werden.

### Vorteile der Erfindung

Mit den Maßnahmen des Anspruchs 1 ist eine einfache und übersichtliche Orientierung des Nutzers, insbesondere für einen geografischen Bereich gegeben, über den der Nutzer keine bekannten Karten- beziehungweise Routendaten verfügt. Dem Nutzer werden bei einem Blick auf das Display die Fragen
- In welcher Richtung und Entfernung liegt mein Ziel?
- In welcher Richtung und Entfernung liegt ein nächster Wegepunkt, der mich zum Ziel führt?
beantwortet.

Die Unteransprüche zeigen vorteilhafte Weiterbildungen des Verfahrens auf.

Mit der kombinierten Ausgabe/Anzeige mehrerer Richtungs- und Entfernungsinformationen kann der Nutzer, abhängig von seiner Umgebung, zum Beispiel nicht befahrbare Einbahnstraßen, Fluß ohne nahegelegene Brücke etc., die für ihn günstigste Route auswählen.

Die Ausgabe nach der Erfindung kombiniert dabei die Richtungs- und Entfernungsangaben zu den unterschiedlichen Wegepunkten kompakt und übersichtlich in einer Anzeige. Vorteilhaft ist dadurch, dass der Fahrer sehr schnell die gewünschten Informationen entnehmen kann. Weiterhin ist vorteilhaft, dass der Fahrer nicht nur eine Richtungsangabe empfohlen bekommt, sondern gleichzeitig mindestens zwei, so dass er eine davon auswählen kann. Der Fahrer wird die nach seiner Meinung günstigere auswählen, um schneller zum Ziel zu gelangen. Dies ist immer dann der Fall, wenn beispielweise eine Richtungsangabe auf einen Fluss oder auf eine Einbahnstraße in Gegenrichtung stößt.

In vorteilhafter Weise kann der Richtungspfeil im Vordergrund oder Blickpunkt des Fahrers dargestellt werden, welcher auch die kürzere und/oder günstigere Entfernung zum Ziel beziehungweise Wegepunkt beinhaltet. Somit wird dem Fahrer die Entscheidung des Navigationsgerätes präsentiert, ohne dass er auf die zweite Information verzichten muss.

In vorteilhafter Weise kann auch der Ziel- oder Wegepunktname (eventuell Straßenname) mit in die Anzeige integriert werden, so dass sich der Nutzer auch anhand der Zielnamen orientieren und entscheiden kann.

In vorteilhafter Weise können die Richtungsanzeigen manuell hin- und hergeschaltet werden, so dass der Fahrer entscheidet, welche Anzeige für ihn die derzeit wichtigere ist.

In vorteilhafter Weise können die Richtungsanzeigen automatisch hin- und hergeschaltet werden, so dass für den Fahrer/Nutzer immer die kürzeste oder geometrisch günstigste im Vordergrund steht.

In vorteilhafter Weise kann auch die Richtung des Fahrzeugs gegenüber Nord mit in die Anzeige integriert werden, was eine weitere Orientierungshilfe für den Fahrer bedeutet.

In vorteilhafter Weise kann neben den Richtungs- und Entfernungsangaben im Hintergrund die dem Navigationsgerät bekannte Geometrie der Karte oder Route oder gar eines zuvor aufgezeichneten Trackings (im Falle einer Offroad-Navigation) zur besseren Orientierung des Fahrers dargestellt werden. Hierdurch erhält der Fahrer nicht nur

Informationen zu zwei Wegepunkten, sondern das gesamte lokale Wissen der Navigation auf einen Blick.

In vorteilhafter Weise kann eine Richtungs- und/oder Entfernungsangabe auch akustisch ausgegeben/gesprochen werden. Dabei sind die Sprachausgaben vorteilhafter Weise an die im Vordergrund stehende optische Richtungsangabe gekoppelt.

### Zeichnungen

Anhand der Zeichnungen werden Ausführungsbeispiele der Erfindung näher erläutert. Es zeigen
Figur 1 eine Topologie einer Streckenführung bei der das Ziel weiter entfernt liegt als ein Wegepunkt der Strecke,
Figur 2 eine kombinierte Richtungs- und Entfernungsanzeige mit zwei Richtungspfeilen,
Figur 3 eine zu Figur 2 alternative Darstellung,
Figur 4 eine weitere, zu Figur 2 alternative Darstellung,
Figur 5 eine kombinierte Richtungs- und Entfernungsanzeige mit einer Routendarstellung im Hintergrund,
Figur 6 eine Topologie einer Streckenführung, bei der das Ziel näher liegt als ein Wegepunkt der Strecke,
Figur 7 eine kombinierte Richtungs- und Entfernungsanzeige für die Topologie gemäß Figur 6,
Figur 8 eine zu Figur 7 alternative Darstellung,
Figur 9 eine weitere zu Figur 7 alternative Darstellung,
Figur 10 die in Figur 8 dargestellte Richt-ungs- und Entfernungsanzeige mit zusätzlicher Einblendung der Routendarstelllung.

### Beschreibung von Ausführungsbeispielen

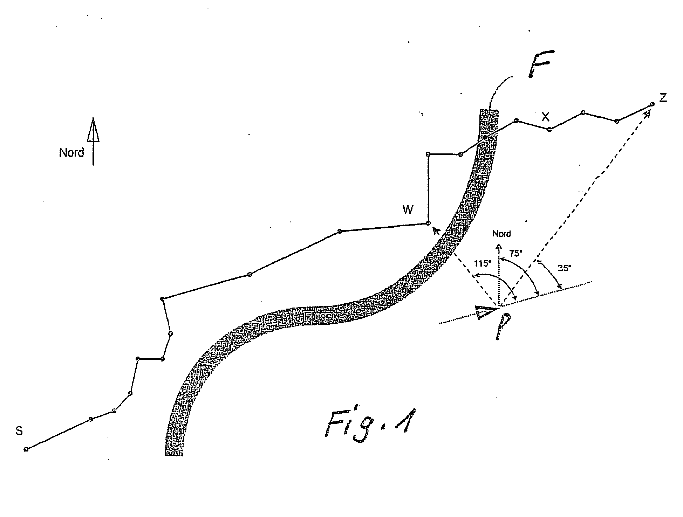

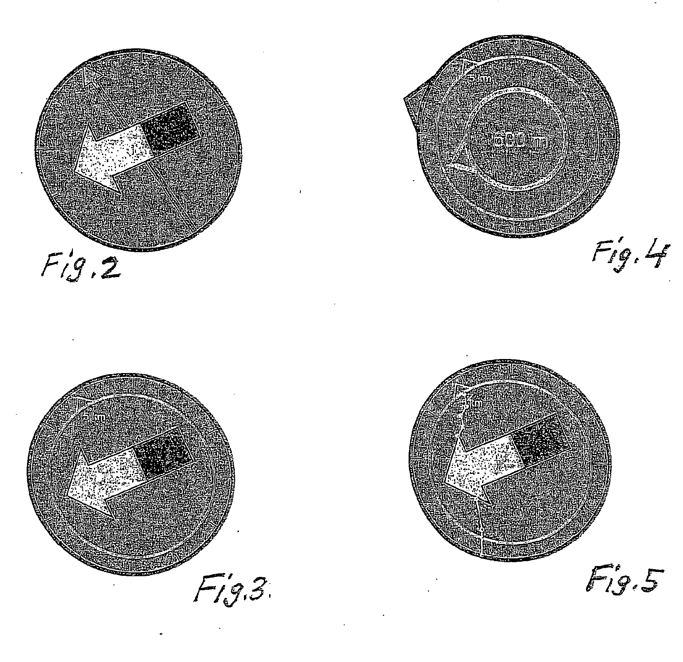

Figur 1 zeigt die Topologie einer Streckenführung von einem Startpunkt S aus zu einem Ziel Z. Die Streckenführung ist dem Nutzer bekannt, das heißt, sie wurde von seinem Navigationsgerät aufgrund eigener Karten- und/oder Routendaten - Karten- beziehungweise Routen-CD - erstellt oder beispielweise aus über Mobilfunk von einer Zentrale für Karten- beziehungweise Routendaten an das Navigationsgerät gesendeten Informationen ermittelt. Von dieser vorgeschlagenen Streckenführung seines Navigationsgerätes hat sich der Fahrer/Nutzer entfernt und befindet sich jetzt an der aktuellen Position P in einem Bereich über den ihm keine bekannten Karten- beziehungweise Routendaten vorliegen; das heißt in einem sogenannten nicht digitalisierten Offroad-Bereich. Von dieser Position P aus kann ein geometrisch in 600m entfernt liegender nahegelegener zielführender Wegepunkt W der bekannten Streckenführung nicht angefahren werden, da er von der Position P aus betrachtet, jenseits eines Flusses F liegt. Zu dieser Topologie erhält der Nutzer erfindungsgemäß zwei Richtungsinformationen und mindestens eine Entfernungsinformation, und zwar eine Richtungsinformation ausgehend von der aktuellen Position P zu dem ihm nahegelegenen Wegepunkt W, über die er Kartenbeziehungweise Routendaten verfügt, sowie eine weitere Richtungsinformation zum Ziel Z oder zu einem weiteren zielführenden Wegepunkt X, der dem Ziel Z nähergelegen ist, als der dem Nutzer nahegelegene Wegepunkt W. Die aufbereiteten Richtungsinformationen werden zur insbesondere gleichzeitigen Ausgabe für den Nutzer aufbereitet und es wird mindestens eine zu einer Richtungsinformation gehörige Entfernungsinformation aufbereitet, die insbesondere zusammen mit den beiden Richtungsinformationen zur Ausgabe für den Nutzer vorgesehen ist. Die Ausgabe erfolgt vorzugsweise grafisch auf einem Display, wie beispielweise in Figur 2 dargestellt. Der im Vordergrund befindliche Pfeil zeigt die Richtungsinformation und die Entfernung zum nächstgelegenen Wegepunkt W der bekannten Streckenführung. Die Entfernung ist anhand eines Distanzbalkens innerhalb dieses Richtungspfeiles zu erkennen. Je kleiner der Distanzbalken geworden ist, desto näher ist der Wegepunkt W. Der im Hintergrund auf dem Display dargestellte Richtungspfeil zeigt in gleicher Weise die Richtung und Entfernung zum Ziel Z. Um den im Vordergrund dargestellten Richtungspfeil in das Blickfeld zu rücken, ist er breiter dargestellt als der Richtungspfeil zum Ziel Z. Alternativ oder zusätzlich wird die Richtungs- und/oder Entfernungsinformation akustisch ausgegeben, zum Beispiel in der Form "nächster Wegepunkt ist 600m entfernt bei 7 Uhr, das Ziel ist 5km entfernt bei 10 Uhr".

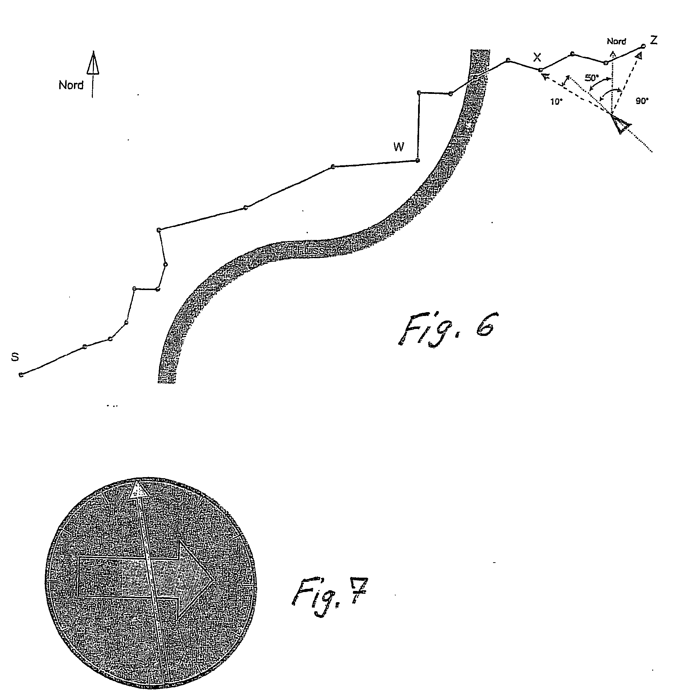

Bei dem Ausführungsbeispiel gemäß Figur 1 kann der Wegepunkt W nicht direkt angefahren werden. Der Fahrer/Nutzer folgt in diesem Falle dem dünnen Richtungspfeil im Hintergrund zum Ziel Z. Der Fahrer ist dem Richtungspfeil zum Ziel Z gefolgt und es hat sich eine neue Situation eingestellt, die in Figur 6 dargestellt ist. Der Fahrer/Nutzer bekommt hierzu die Richtungsanzeigen mit integrierter Entfernungsanzeige wie in Figur 7 dargestellt. Da ein neuer anzufahrender Wegepunkt von der Navigation bestimmt wurde, wird gleichzeitig die Sprachausgabe aktiviert: "Das Ziel ist 500m entfernt bei 3 Uhr, nächster Wegepunkt ist 600m entfernt bei 12 Uhr". Der Fahrer/Nutzer folgt diesmal der Richtung zum Wegepunkt X (Zwischenziel), da er keine.Straße finden kann, die auch nur annähernd in Richtung zum Ziel Z führt. Nachdem er den Wegepunkt X erreicht hat, befindet er sich nicht mehr im Offroad-Bereich und kann wie gewohnt von seinem Navigationsgerät auf der bekannten Route zum Ziel Z geführt werden.

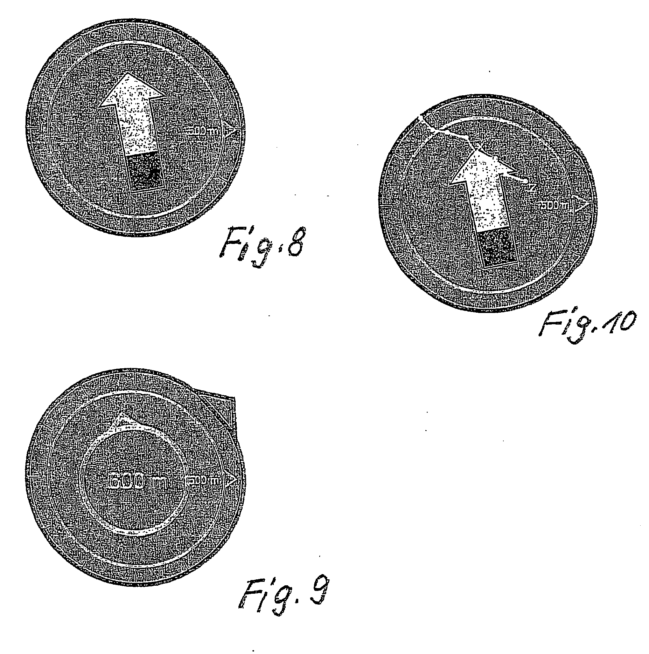

Figur 3 und Figur 8 zeigen die Darstellung von zwei Richtungsanzeigen, in der der im Vordergrund gelegene Pfeil wieder in gleicher Weise die Richtung und Entfernung zum nächstgelegenen Wegepunkt der bekannten Route zeigt. Die Entfernung ist wiederum anhand eines Distanzbalkens im Pfeil zu erkennen. Die Pfeilspitze am äußeren Kreis zeigt die Richtung zum Ziel, wobei die Entfernung als Text platziert wurde. In einer Weiterentwicklung kann auch die Entfernung zum nächsten Wegepunkt als Text dargestellt sein.

Figur 4 und Figur 9 zeigen wiederum die Informationen Richtung und Entfernung zum Wegepunkt und Ziel als Kreis mit Pfeilspitze dargestellt. Die schneller wahrzunehmende Information ist größer und zentral in der Mitte angeordnet. Desweiteren ist auf dem äußeren Rand durch eine Pfeilspitze die Nordrichtung dargestellt.

Figur 5 und Figur 10 zeigen die gleiche Information wie in Figur 3 und Figur 8, zusätzlich jedoch eine Abbildung der Route oder Karte, über die der Nutzer verfügt oder eventuell eines aufgezeichneten Trackings bei Offroad-Betrieb. Alternativ können die verschiedenen Darstellungsmöglichkeiten auch untereinander kombiniert werden.

Neben der optischen Anzeige kann, wie zuvor erwähnt, auch eine akustische Anzeige erfolgen. Die Ansage kann dabei eine oder mehrere Richtungs- und/oder Entfernungsangaben sprechen. Der Zeitpunkt einer neuen Ansage kann durch Eintreten eines oder mehrerer der folgenden Kriterien bestimmt werden:
- nach Ablauf eines definierten (statischen oder dynamischen) Zeitintervalls, zum Beispiel bei hoher Geschwindigkeit kurzes Intervall, bei niedriger Geschwindigkeit langes Intervall,
- bei Änderung des anzusteuernden Wegepunktes, auf den sich die Anzeige bezieht,
- nach Zurücklegen einer definierten Streckeneinheit,
- nach Überschreiten einer definierten Richtungsänderung gegenüber der letzten Richtungsansage,
- nach Unterschreiten einer definierten Distanz zum anzufahrenden Wegepunkt.

Mögliche Ansagen können in der Form
- "Nächster Wegepunkt ist 600m entfernt bei 7 Uhr"
- "Das Ziel ist 5km entfernt bei 10 Uhr"
- "Nächster Wegepunkt liegt 600m links hinter dem Fahrzeug"
gesprochen werden.

Es können neben den Richtungs- und Entfernungsinformationen zusätzliche beschreibende Attribute auf dem Display dargestellt werden, zum Beispiel Ziel- oder Wegepunktname (Straßenname), anhand derer sich der Nutzer schnell orientieren und entscheiden kann. Die Richtungsanzeigen können vom Nutzer aus individuell einstellbar, insbesondere hin- und herschaltbar sein, bezüglich Vordergrund- und Hintergrunddarstellung. Der Nutzer kann so selbst entscheiden, welche Anzeige die für ihn derzeit wichtigere ist, insbesondere abhängig von seiner Umgebung, zum Beispiel nicht befahrene Einbahnstraßen, Fluss ohne nahegelegene Brücke usw.

Die Richtungsinformation im Offroad-Bereich erhält der Nutzer beispielsweise über seine GPS-Einrichtung. Die Entfernung von der aktuellen Position P zu bekannten Wegepunkten W, X, Z, lässt sich am einfachsten durch die Norm des Differenzvektors ermitteln.

## Patentansprüche

1. Verfahren zur Bereitstellung von Zielführungshinweisen für einen Nutzer mit folgenden Schritten:
- Im Offroadbereich, d. h. in einem Bereich über den keine bekannten Karten- bzw. Routendaten vorliegen, werden mindestens zwei Richtungsinformationen für den Nutzer aufbereitet, und zwar wenigstens eine erste Richtungsinformation, ausgehend von einer aktuellen Position (P) des Nutzers zu einem ihm nahegelegenen zielführenden Wegepunkt (W) zu dem er über Karten- beziehungsweise Routendaten verfügt, sowie eine weitere Richtungsinformation zum Ziel (Z) oder zu einem weiteren zielführenden Wegepunkt (X), über den Karten- bzw. Routendaten vorliegen, der dem Ziel (Z) nähergelegen ist, als der dem Nutzer nahegelegene Wegepunkt (W),
- die aufbereiteten Richtungsinformationen werden zur insbesondere gleichzeitigen Ausgabe für den Nutzer gebracht,
- zu den aufbereiteten Richtungsinformationen wird mindestens eine zu einer der Richtungsinformationen gehörige Entfernungsinformation aufbereitet, die insbesondere zusammen mit den Richtungsinformationen zur Ausgabe für den Nutzer vorgesehen ist.

2. Verfahren nach Anspruch 1, **dadurch gekennzeichnet, dass** die Richtungsinformationen als Richtungspfeile auf einem Display dargestellt werden.

3. Verfahren nach Anspruch 1 oder 2, **dadurch gekennzeichnet, dass** die Entfernungsinformationen als Distanzbalken insbesondere innerhalb der zugehörigen Richtungsinformation/dem zugehörigen Richtungspfeil dargestellt wird/werden.

4. Verfahren nach einem der Ansprüche 1 bis 3, **dadurch gekennzeichnet, dass** entweder die erste Richtungsinformation oder die weitere Richtungsinformation im Vordergrund auf einem Display dargestellt wird.

5. Verfahren nach Anspruch 4, **dadurch gekennzeichnet, dass** die Anzeige der Richtungsinformationen automatisch derart geändert wird, dass dem Nutzer stets die kürzeste oder geometrisch günstigste Richtungsinformation im Vordergrund auf dem Display dargestellt wird.

6. Verfahren nach Anspruch 4, **dadurch gekennzeichnet, dass** die Anzeige der Richtungsinformationen vom Nutzer individuell einstellbar ist und jeweils jene Richtungsinformation im Vordergrund auf dem Display dargestellt wird, die der Nutzer aktuell als am wichtigsten erachtet.

7. Verfahren nach einem der Ansprüche 1 bis 6, **dadurch gekennzeichnet, dass** die Richtungsinformationen zusammen mit beschreibenden Attributen wie Wegepunktname, Straßenname usw. ausgegeben beziehungsweise auf einem/dem Display dargestellt werden.

8. Verfahren nach einem der Ansprüche 1 bis 7, **dadurch gekennzeichnet, dass** eine vorgegebene Bezugsrichtung, zum Beispiel die Nordrichtung, neben den Richtungsinformationen ausgegeben beziehungsweise auf einem/dem Display dargestellt wird.

9. Verfahren nach einem der Ansprüche 1 bis 8, **dadurch gekennzeichnet, dass** die Richtungsinformationen und die mindestens eine Entfernungsinformation akustisch ausgegeben werden, insbesondere die im Vordergrund auf dem Display dargestellte Richtungs- und Entfernungsinformation.

10. Verfahren nach einem der Ansprüche 1 bis 9, **dadurch gekennzeichnet, dass** die Entfernungsinformation in Textform gegebenenfalls zusätzlich zum Distanzbalken ausgegeben wird.

11. Verfahren nach einem der Ansprüche 1 bis 10, **dadurch gekennzeichnet, dass** neben den Richtungsinformationen und der mindestens einen Entfernungsinformation als Hintergrund einer Displayanzeige die dem nutzereigenen Navigationsgerät bekannte Geometrie einer Karte oder Route dargestellt wird und/oder ein im Offroad-Bereich aufgezeichnetes Tracking.

## Claims

1. Method for providing routing advice for a user, having the following steps:
- in the offroad area, i.e. in an area for which there are no known map or route data available, at least two pieces of direction information are conditioned for the user, specifically at least a first piece of direction information, from a current position (P) of the user to a routing waypoint (W) which is close to him and for which he has map or route data, and also a further piece of direction information relating to the destination (Z) or relating to a further routing waypoint (X) for which there are map or route data available and which is closer to the destination (Z) than the waypoint (W) which is close to the user,
- the conditioned pieces of direction information are, in particular, simultaneously output for the user,
- at least one piece of distance information associated with one of the pieces of direction information is conditioned for the conditioned pieces of direction information, said piece of distance information being provided, in particular together with the pieces of direction information, for output for the user.

2. Method according to Claim 1, **characterized in that** the pieces of direction information are shown as direction arrows on a display.

3. Method according to Claim 1 or 2, **characterized in that** the pieces of distance information are shown as distance bars, particularly within the associated piece of direction information/the associated direction arrow.

4. Method according to one of Claims 1 to 3, **characterized in that** either the first piece of direction information or the further piece of direction information is shown in the foreground on a display.

5. Method according to Claim 4, **characterized in that** the display of the pieces of direction information is automatically changed such that the user is always shown the shortest or geometrically most favourable piece of direction information in the foreground on the display.

6. Method according to Claim 4, **characterized in that** the display of the pieces of direction information can be individually adjusted by the user and the respective piece of direction information which is shown in the foreground on the display is that which the user currently considers most important.

7. Method according to one of Claims 1 to 6, **characterized in that** the pieces of direction information are output or shown on a/the display together with descriptive attributes such as waypoint name, road name, etc.

8. Method according to one of Claims 1 to 7, **characterized in that** a prescribed reference direction, for example the northern direction, is output or shown on a/the display in addition to the pieces of direction information.

9. Method according to one of Claims 1 to 8, **characterized in that** the pieces of direction information and the at least one piece of distance information are output audibly, particularly the piece of direction and distance information which is shown in the foreground on the display.

10. Method according to one of Claims 1 to 9, **characterized in that** the piece of distance information is output in text form, possibly in addition to the distance bar.

11. Method according to one of Claims 1 to 10, **characterized in that** in addition to the pieces of direction information and the at least one piece of distance information, a map's or route's geometry, which is known to the user's own navigation appliance, and/or tracking recorded in the offroad area is/are shown as the background to a display indication.

## Revendications

1. Procédé pour délivrer à un utilisateur des instructions de guidage vers une destination comprenant les étapes suivantes :
- Dans une zone off-road, c'est-à-dire dans une zone pour laquelle il n'existe pas des données cartographiques ou d'itinéraire connues, au moins deux informations de direction sont préparées pour l'utilisateur, à savoir au moins une première information de direction à partir de la position actuelle (P) de l'utilisateur vers un point de parcours (W) à proximité de celui-ci et menant à la destination et à propos duquel il dispose de données cartographiques ou d'itinéraire ainsi qu'une autre information de direction vers la destination (Z) ou vers un autre point de parcours (X) menant à la destination et à propos duquel il existe des données cartographiques ou d'itinéraire, lequel est plus proche de la destination (Z) que le point de parcours (W) proche de l'utilisateur,
- Les informations de direction préparées sont acheminées à l'utilisateur, notamment en vue d'une présentation simultanée,
- Au moins une information de distance appartenant à l'une des informations de direction est préparée à propos des informations de direction préparées, laquelle est destinée à être présentée à l'utilisateur, notamment conjointement avec les informations de direction.

2. Procédé selon la revendication 1, **caractérisé en ce que** les informations de direction sont représentées sur un afficheur sous la forme de flèches de direction.

3. Procédé selon la revendication 1 ou 2, **caractérisé en ce que** les informations de distance sont représentées sous la forme de barres de distance, notamment au sein de l'information de direction / de la flèche de direction associée.

4. Procédé selon l'une des revendications 1 à 3, **caractérisé en ce que** soit la première information de direction, soit l'information de direction supplémentaire est représentée au premier plan sur un afficheur.

5. Procédé selon la revendication 4, **caractérisé en ce que** l'affichage des informations de direction est modifié automatiquement de telle sorte que l'utilisateur se voit toujours présenter l'information de direction la plus courte ou géométriquement la plus favorable au premier plan sur l'afficheur.

6. Procédé selon la revendication 4, **caractérisé en ce que** l'affichage des informations de direction est réglable individuellement par l'utilisateur et l'information de direction qui est à chaque fois présentée au premier plan sur l'afficheur est celle qui est couramment considérée la plus importante par l'utilisateur.

7. Procédé selon l'une des revendications 1 à 6, **caractérisé en ce que** les informations de direction sont délivrées et/ou représentées sur un/l'afficheur conjointement avec des attributs descriptifs tels que le nom du point du parcours, le nom de la rue, etc.

8. Procédé selon l'une des revendications 1 à 7, **caractérisé en ce qu'**une direction de référence prédéfinie, par exemple la direction du nord, est délivrée et/ou représentée sur un/l'afficheur en plus des informations de direction.

9. Procédé selon l'une des revendications 1 à 8, **caractérisé en ce que** les informations de direction et l'au moins une information de distance sont délivrées sous forme sonore, notamment les informations de direction et de distance représentées au premier plan sur l'afficheur.

10. Procédé selon l'une des revendications 1 à 9, **caractérisé en ce que** l'information de distance est délivrée sous forme de texte, éventuellement en plus des barres de distance.

11. Procédé selon l'une des revendications 1 à 10, **caractérisé en ce qu'**en plus des informations de direction et de l'au moins une information de distance, la forme géométrique connue de l'appareil de navigation propre à l'utilisateur d'une carte ou d'un itinéraire et/ou d'un trajet enregistré dans une zone off-road est représentée en arrière-plan sur un affichage de l'afficheur.
